# EUROPÄISCHE PATENTSCHRIFT

(11) **EP 0 583 724 B1**
(45) Veröffentlichungstag und Bekanntmachung des Hinweises auf die Patenterteilung: **22.05.1996**
(21) Anmeldenummer: 93112843.3
(22) Anmeldetag: 11.08.1993
(51) Int. Cl.: H02P 3/08, H02P 3/10

(54) **Verfahren und Schaltung zur Steuerung eines Motors**
Method and circuit for controlling a motor
Procédé et circuit pour commander un moteur

(30) Priorität: 20.08.1992 DE 4226934
(43) Veröffentlichungstag der Anmeldung: 23.02.1994
(73) Patentinhaber: DEUTSCHE THOMSON-BRANDT GMBH, D-78048 Villingen-Schwenningen (DE)
(72) Erfinder: Gleim, Günter, D-78052 Villingen-Schwenningen (DE); Link, Hermann, D-78052 Villingen-Schwenningen (DE); Bildl, Michael, Singapore 1130 (SG); Heizmann, Friedrich, D-78052 Villingen-Schwenningen (DE)

(56) Entgegenhaltungen:
- DE-A- 2 233 188
- DE-A- 4 038 199
- PATENT ABSTRACTS OF JAPAN vol. 9, no. 310 (E-364) (2033) 6. Dezember 1985 & JP-A-60 144 153 (MATSUSHITA DENKI SANGYO KK) 30. Juli 1985

## Beschreibung

Die Erfindung geht aus von einem Verfahren gemäß dem Oberbegriff des Anspruchs 1. bzw. einer Vorrichtung gemäß dem Oberbegriff des Anspruchs 9. Eine solche Vorrichtung ist aus DE-A-4 038 199 bekannt. Es ist bekannt, Motore nicht mit einer Gleichspannung veränderbarer Größe, sondern mit einer impulsweitenmodulierten Spannung konstanter Amplitude zu speisen, wobei die Impulsweitenmodulation (PWM) das jeweilige Drehmoment oder die Drehzahl bestimmt. Dieser Betrieb wird auch als Chopper-Betrieb bezeichnet. Die Frequenz der impulsleitenmodulierten Impulse liegt dabei oberhalb des Hörbereiches, einerseits, um eine Hörbarkeit der Motoransteuerung zu vermeiden und andererseits um sicherzustellen, daß trotz der getasteten Steuerung in der Motorwicklung durch die integrierende Wirkung praktisch ein Gleichstrom fließt, dessen Größe durch die PWM bestimmt ist.

Zur Einleitung eines Bremsvorganges des Motors oder zur Drehrichtungumkehr ist es bekannt, jeweils die Motorwicklungen innerhalb der Schaltung umzupolen, so daß der Motor plötzlich in Gegendrehrichtung angetrieben wird. Der Motor läuft dann zunächst in seiner bisherigen Drehrichtung weiter, wird dabei gebremst und nimmt dann die entgegengesetzte Drehrichtung ein. Bei dieser Art des Abremsens ergibt sich folgende Schwierigkeit.

Die Enden der Motorwicklungen sind über Schutzdioden mit der Betriebsspannung oder Erde verbunden. Die Dioden dienen dazu, die angeschlossenen Halbleiterbauteile gegen Zerstörung durch Spannungsspitzen an den Motorwicklungen zu schützen. Wenn jetzt zu Beginn eines Bremsvorganges eine Motorwicklung umgepolt wird, kann durch die Wirkung der genannten Dioden unabhängig von der Ansteuerung ein hoher Strom fließen, der durch die den Motor erzeugte Generatorspannung oder EMK und den Widerstand der Motorwicklung gegeben ist. Dieser Strom wirkt auf Grund der Drehung des Motors, d.h. durch die Relativbewegung zwischen den Motorwicklungen und den Permanentmagneten als Bremsstrom. Da dieser Strom den genannten Wert nicht unterschreiten kann, kann in vielen Fällen die Bremswirkung zu groß sein. Wenn z.B. der Motor der Capstan-Motor in einem Videorecorder ist und die Abbremsung des Bandvorschubes zu schnell erfolgt, kann es durch die Trägheit des weiterlaufenden Abwickeltellers zur Schlaufenbildung des Magnetbandes kommen.

Der Erfindung liegt die Aufgabe zugrunde, ein Verfahren zur Steuerung eines Motors mit impulsweitenmodulierter Ansteuerung zu schaffen, das eine definierte Bremswirkung ermöglicht. Diese Aufgabe wird durch die im Anspruch 1 bzw. 9 angegebene Erfindung gelöst. Vorteilhafte Weiterbildungen der Erfindung sind in den Unteransprüchen angegeben.

Bei der Erfindung wird also für die Einleitung des Bremsvorganges nicht eine statische Umpolung der Motorwicklung relativ zu den Einspeiseklemmen durchgeführt, sondern eine intermittierende Umpolung. Während einer Periode, die vorzugsweise gleich der Periode der impulsweitenmodulierten Spannung ist, erfolgt also für eine bestimmte Zeit die genannte Umpolung der Wicklung, während diese Umpolung für die übrige Zeit der Periode aufgehoben ist. Durch Wahl des Puls/Pausen-Verhältnisses in dieser intermittierenden Umpolung der Wicklung kann die Bremswirkung in weiten Grenzen geändert werden. Eine Änderung von Frequenz oder Amplitude der eigentlichen Impulsweitenmodulierten Betriebsspannung für den Motor ist dabei nicht erforderlich.

Vorzugsweise werden eine die Soll-Drehrichtung anzeigende erste Stellgröße und eine die Ist-Drehrichtung anzeigende zweite Stellgröße verglichen und daraus eine bei Abweichung auftretende dritte Stellgröße gewonnen, die die intermittierende Umpolung der Wicklung auslöst. Das Verhältnis der Dauer der genannten Umpolung zu der gesamten Periode der intermittierenden Umpolung ist vorzugsweise zwischen den Werten 0 und 1 veränderbar. Die weitenmodulierten Impulse und die Schaltspannung für die intermittierende Umpolung werden vorzugsweiseaus derselben Impulsspannung abgeleitet. Bei Übereinstimmung zwischen Soll- und Ist-Drehrichtung wird der Motor nur durch die impulsweitenmodulierten Impulse in Sinne konstanter Drehrichtung und bei Nicht-Übereinstimmung zwischen Soll- und Ist-Drehrichtung wird der Motor abwechselnd im Sinne entgegen gesetzer Drehrichtung gespeist. Die die Ist-Drehrichtung des anzeigende zweite Stellgröße wird vorzugsweise durch dem Motor zugeordnete Sensoren ermittelt. Die Information über die gewünschte Bremswirkung wird vorzugsweise über Sensoren vom Motor und/oder aus motortypischen Daten abgeleitet.

Die Erfindung wird im folgenden anhand der Zeichnung näher erläutert. Darin zeigen
- Fig. 1: ein Prinzipschaltbild für das erfindugsgemäße Verfahren,
- Fig. 2: ein Diagramm für die bei unterschiedlichem PulsPausenverhältnis der intermittierenden Umpolung entstehenden Ströme,
- Fig. 3: ein Prinzipblockschaltbild des erfindungsgemäßen Verfahrens und
- Fig. 4 - 11: eine logische Schaltung für verschiedene Betriebszuständen.

In der Beschreibung haben die verwendeten Symbole folgende Bedeutung:
- UB: konstante Betriebsspannung für die Motorspeisung
- UG: in der Motorwicklung induzierte EMK
- IM: Strom durch den Motor
- RM: Widerstand der Motorwicklung
- T: Periode der impulsweitenmodulierten Spannung und der intermittierenden Umpolung
- ton: Dauer der Umpolung während der Periode der intermittierenden Umpolung
- P =: ton/T

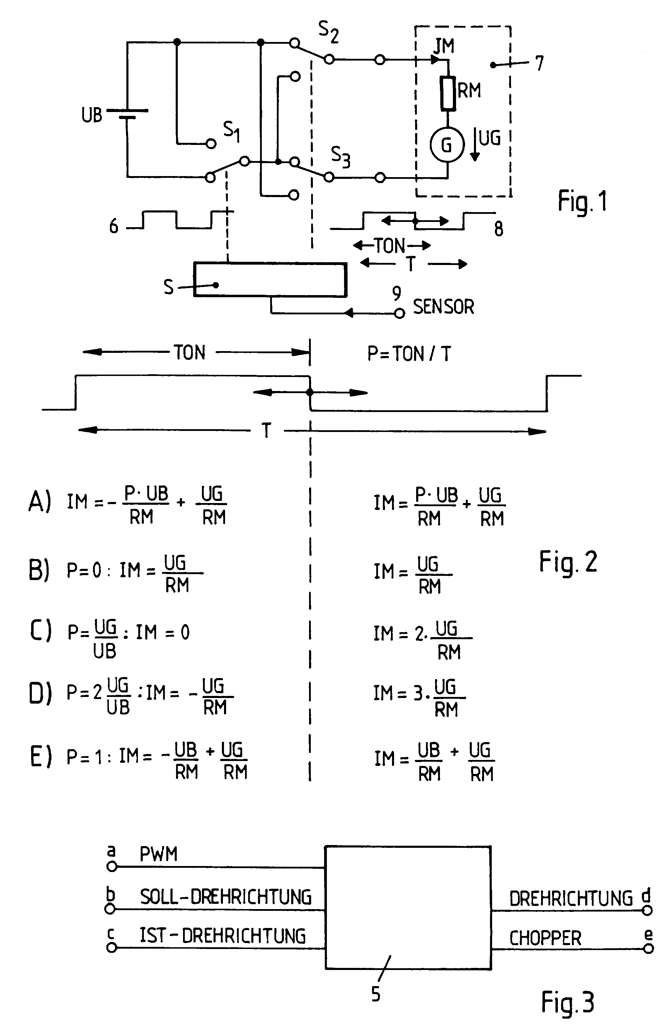

In Fig. 1 wird die Betriebsspannung UB mit dem Schalter S1 in eine impulsweitenmodulierte Impulsspannung umgewandelt. S1 wird von der Steuerschaltung S durch die impulsweitenmodulierte Impulsspannung 6 betätigt. Die dadurch entstehende impulsweitenmodulierte Impulsspannung vom Ausgang von S1 gelangt über die Umschalter S2, S3 auf den Motor 7, für den der die induzierte Spannung UG oder EMK erzeugende Generator G und der Widerstand RM der Motorwicklung dargestellt sind. Zur Einleitung eines Bremsvorganges werden die Schalter S2, S3 durch die Steuerschaltung S in die andere Stellung umgelegt. Das bedeutet, daß die Wicklung des Motors 7 relativ zu der speisenden Spannung umgepolt wird. Diese Umpolung erfolgt aber nicht immer statisch, sondern kann auch intermittierend sein, wie durch die Schaltspannung 8 dargestellt ist. Die Einschaltdauer ton der Umpolung durch die Schalter S2, S3 relativ zur Periode T der intermittierenden Umpolung bestimmt das Bremsmoment. Der Wert von ton und somit das Bremsmoment werden durch eine Steuerschaltung S bestimmt. Diese erhält über die Klemme 9 zusätzlich Informationen von Sensoren über mechanische oder elektrische Motorwerte.

Anhand der Fig. 2 wird anhand von Gleichungen erläutert, wie eine jeweils gewünschte Bremswirkung durch Änderung des Tastverhältnisses P = ton/T erzielbar ist. Die Gleichung A zeigt den Motorstrom IM, und zwar einmal für die Zeit ton und einmal für die darauffolgende Pause T-ton. Die Gleichung A gilt somit allgemein. Gleichung B zeigt den sich ergebenden Strom bei P = 0, Gleichung C für ein spezielles P, Gleichung D für ein anderes P und Gleichung E für den anderen Grenzwert P = 1. Da der Strom iM über die gesamte Periode T integriert wird, ist für die Bremswirkung jeweils der über die Zeiten ton und T-ton integrierte Stromwert maßgebend. Es ist ersichtlich, daß dieser Wert für bestimmte Werte zwischen P = 0 und P = 1 sehr klein oder null sein kann. Wenn z.B. der negative Ausdruck in den Gleichungen = UG/RM wird, ist der integrierte Stromwert praktisch null. Daher kann durch Wahl von P zwischen 0 und 1, d.h. zwischen überhaupt nicht erfolgender Umpolung und ständiger Umpolung die jeweils gewünschte Bremswirkung eingestellt werden.

Fig. 3 zeigt ein vereinfachtes Blockschalbild zur Realisierung des erfindungsgemäßen Verfahrens. Dargestellt ist eine logische Schaltung 5, die drei Eingänge, a, b, c aufweist. Dem Eingang a wird die pulsweitenmodulierte Impulsspannung zugeführt, wie sie am Ausgang von S1 in Fig. 1 steht. Dem Eingang b wird die erste, die Soll-Drehrichtung anzeigende Stellgröße und dem Eingang c die zweite, die Ist-Drehrichtung anzeigende Stellgröße zugeführt. Die Schaltung 5 hat zwei Ausgänge d und e. Der Ausgang d steuert die Umpolung der Wicklung durch die Schalter S2, S3. Der Ausgang e führt die eigentlichen impulsweitenmodulierte Speisespannung, wie sie in Fig. 1 am Ausgang von S1 steht.

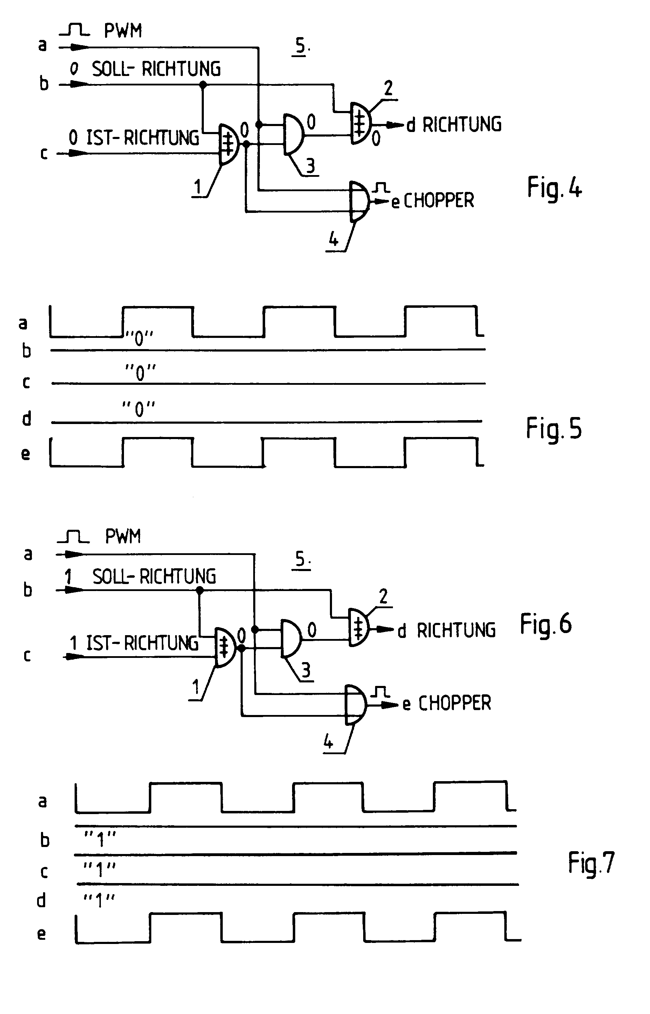

In den Figuren 4 - 11 zeigen die Buchstaben a - e, welche Spannungen gemäß Fig. 5, 7, 9, 10 an den entsprechenden Eingängen a, b, c und Ausgängen d, e in den Fig. 4, 6, 8, 10 stehen.

Fig. 4, 5 zeigt eine mögliche praktische Realisierung der Schaltung 5 gemäß Fig. 3. Die Schaltung 5 enthält ein erstes EXOR-Gatter 1, ein zweites EXOR-Gatter 2, ein UND-Gatter 3 und ein ODER-Gatter 4. Fig. 4 gilt für den Fall, daß Soll-Drehrichtung und Ist-Drehrichtung übereinstimmen, also beide Stellgrößen an den Eingängen b, c den Wert 0 haben. Am Ausgang d erscheint dann der Wert 0, so daß die Drehrichtung in erwünschter Weise nicht umgeschaltet wird. Am Ausgang e steht die eigentliche impulsweitenmodulierte Spannung zur Speisung des Motors. Dieses ist der Fall, daß der Motor mit seiner Soll-Drehrichtung läuft und somit eine Umpolung einer Wicklung nicht erfolgen soll.

Fig. 6, 7 zeigen die gleichen Verhältnisse für stationären Betrieb mit Übereistimmung zwischen Soll-Richtung und Ist-Richtung, nur für die andere Drehrichtung.

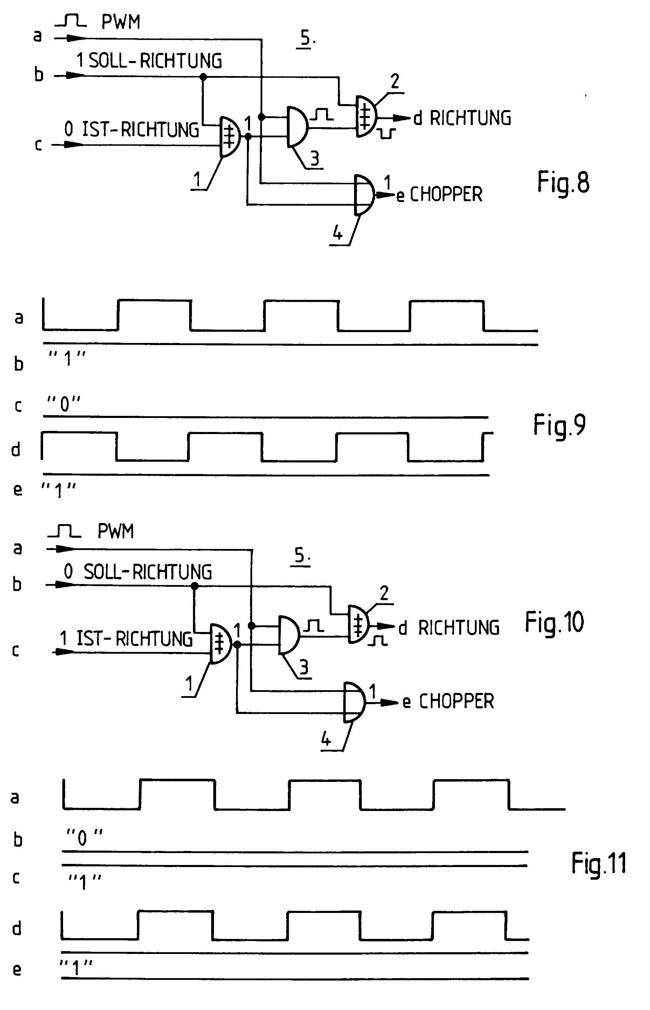

Fig. 8, 9 zeigen den Fall, daß die Stellgröße am Eingang b für die Soll-Drehrichtung und die Stellgröße am Eingang c für Ist-Drehrichtung voneinander abweichen. Der Ausgang e, der an sich in Fig. 4 - 7 die impulsweitenmodulierte Spannung führt, bleibt jetzt auf 1. Das bedeutet zunächst, daß am Ausgang von S1 in Fig. 1 ständig die volle Betriebsspannung UB steht. Der Ausgang d, der die Umpolung der Motorwicklung bewirkt, entspricht jetzt der impulsweitenmodulierten Spannung am Eingang a. Das bedeutet jetzt, daß die Motorwicklung entsprechend dem Wert P gemäß Fig. 2 intermittierend umgepolt wird.

Fig. 10, 11 gelten entsprechend für den Fall, daß die Soll-Drehrichtung und die Ist-Drehrichtung gegenüber Fig. 8, 9 jeweils den anderen Wert haben. Ansonsten ist die Wirkung ähnlich wie in Fig. 8, 9, mit dem Unterschied, daß nunmehr die Impulsspannung am Ausgang d, die die Umpolung der Motorwirkung bewirkt, gegenüber Fig. 9 um 180° gedreht ist. Es ist ersichtlich, daß die Impulsspannung zur Speisung des Motors einerseits und die Impulsspannung für die Umpolung der Motorwicklung für den Bremsvorgang aus derselben Eingangsspannung an der Klemme a abgeleitet sind. Die eigentliche Energieeinspeisung des Motors kommt ständig vom Ausgang e der Schaltung 5, während der Ausgang d die Umpolung der Wicklung entsprechend den Schaltern S2, S3 in Fig. 1 steuert.

## Patentansprüche

1. Verfahren zur Steuerung eines Motors, bei dem einer Motorwicklung impulsweitenmodulierte Impulse (a) zugeführt werden und zur Einleitung eines Bremsvorgangs die Wicklung umgepolt wird, **dadurch gekennzeichnet**, daß eine intermittierende Umpolung der Wicklung für durch Pausen (T-ton) getrennte Zeitschnitte (ton) bewirkt wird, deren Dauer von der jeweils gewünschten Bremswirkung abhängig ist.

2. Verfahren nach Anspruch 1, **dadurch gekennzeichnet**, daß eine die Soll-Drehrichtung anzeigende erste Stellgröße (b) und eine die Ist-Drehrichtung anzeigende zweite Stellgröße (c) verglichen werden und eine bei Abweichung auftretende dritte Stellgröße (d) die intermittierende Umpolung der Wicklung auslöst.

3. Verahren nach Anspruch 1, **dadurch gekennzeichnet**, daß das Verhältnis (P) der Dauer (ton) der Umpolung zu der Periode (T) aus Umpolung und Pause zwischen den Werten 0 und 1 veränderbar ist.

4. Verfahren nach Anspruch 1, **dadurch gekennzeichnet**, daß die impulsweitenmodulierten Impulse (e) und eine Schaltspannung (d) für die intermittierende Umpolung aus derselben Impulsspannung (a) abgeleitet werden.

5. Verfahren nach Anspruch 1, **dadurch gekennzeichnet**, daß bei Übereinstimmung zwischen Soll- und Ist-Drehrichtung der Motor (7) nur durch die impulsweitenmodulierten Impulse (e) im Sinne konstanter Drehrichtung und bei Nicht-Übereinstimmung zwischen Soll- und Ist-Drehrichtung der Motor (7) abwechselnd im Sinne entgegengesetzter Drehrichtung gespeist wird.

6. Verfahren nach Anspruch 1, **dadurch gekennzeichnet**, daß die Frequenz der impulsweitenmodulierten Impulse (a, e) oberhalb des Hörbereiches liegt.

7. Verfahren nach Anspruch 1, **dadurch gekennzeichnet**, daß die die Ist-Drehrichtung anzeigende zweite Stellgröße (c) durch dem Motor (7) zugeordnete Sensoren ermittelt wird.

8. Verfahren nach Anspruch 1, **dadurch gekennzeichnet**, daß die Information über die gewünschte Bremswirkung über Sensoren vom Motor (7) und/oder aus motortypischen Daten abgeleitet wird.

9. Schaltung für ein Verfahren nach Anspruch 2 zur Steuerung eines Motors, mit Mitteln zur Zuführung von impulsweitenmodulierten Impulsen (a) in eine Motorwicklung,
mit Mitteln zur Umpolung der Wicklung zur Einleitung eines Bremsvorgangs, **dadurch gekennzeichnet**, daß die Umpolung intermittierend für durch Pausen (T-ton) getrennte Zeitabschnitte (ton) erfolgt, deren Dauer von der jeweils gewünschten Bremswirkung abhängig ist, wobei Mittel zum Vergleich einer die Soll-Drehrichtung anzeigenden ersten Stellgröße (b) und einer der lst-Drehrichtung anzeigenden zweiten Stellgröße (c) vorhander sind,
wobei eine bei Abweichung auftrefende dritte Stellgröße (d) die intermittierende Umpolung der Wicklung auslöst, wobei die Schaltung als logische Schaltung (5) ausgebildet ist, die drei Eingänge (a, b, c) für die impulsweitenmodulierten Impulse (a), für die erste Stellgröße (b) und für die zweite Stellgröße (c) und zwei Ausgänge (d, e) für die Umpolung der Wicklung und für den Motorantrieb aufweist (Fig. 3).

10. Schaltung nach Anspruch 9, **dadurch gekennzeichnet**, daß eine die impulsweitenmodulierten Impulse führende Klemme (a) an die ersten Eingänge eines UND-Gatters (3) und eines ODER-Gatters (4), eine die erste Stellgröße führende Klemme (b) an die ersten Eingänge eines ersten EXOR-Gatters (1) und eines zweiten EXOR-Gatters (2), eine die zweite Stellgröße führende Klemme (c) an den zweiten Eingang des ersten EXOR-Gatters (1), daß der Ausgang des ersten EXOR-Gatters (1) an die zweiten Eingängen des UND-Gatters (3) und des ODER-Gatters (4) und der Ausgang des UND-Gatters (3) an den zweiten Eingang des zweiten EXOR-Gatters (2) angeschlossen ist und daß der Ausgang des ODER-Gatters (4) die Impulse zum Antrieb des Motors (7) und der Ausgang (d) des zweiten EXOR-Gatters (2) eine Schaltspannung zur Umpolung der Wicklung liefert.

11. Verfahren nach Anspruch 1, **dadurch gekennzeichnet**, daß keine Impulse konstanter Amplitude zur Ansteuerung benutzt werden müssen.

## Claims

1. A method for the control of a motor in which pulse width modulated pulses (a) are supplied to a motor winding and the winding is reverse poled for starting a braking process, characterised in that, an intermittent reversal of the poles of the winding is effected for time periods (ton) which are separated by pauses (T-ton) and the duration of which is dependent upon the currently desired braking effect.

2. A method in accordance with Claim 1, characterised in that, a first control variable (b) indicating the desired direction of rotation and a second control variable (c) indicating the actual direction of rotation are compared and a third control variable (d) occurring upon deviation initiates the intermittent reversal of the poles of the winding.

3. A method in accordance with Claim 1, characterised in that, the ratio (P) of the duration (ton) of the reversal of the poles to the period (T) comprising the reversal of the poles and the pause is variable between the values O and 1.

4. A method in accordance with Claim 1, characterised in that, the pulse width modulated pulses (e) and a switching voltage (d) for the intermittent reversal of the poles are derived from the same pulse voltage (a).

5. A method in accordance with Claim 1, characterised in that, with coincidence between the desired and the actual direction of rotation, the motor (7) is only fed by the pulse width modulated pulses (e) in the sense of a constant direction of rotation and for non-coincidence between the desired and the actual direction of rotation, the motor (7) is fed alternately in the sense of an opposed direction of rotation.

6. A method in accordance with Claim 1, characterised in that, the frequency of the pulse width modulated pulses (a,e) lies above the audible range.

7. A method in accordance with Claim 1, characterised in that, the second control variable (c) indicating the actual direction of rotation is determined by sensors associated with the motor (7).

8. A method in accordance with Claim 1, characterised in that, the information regarding the desired braking effect is derived via sensors of the motor (7) and/or from data typical to the motor.

9. A circuit for a method in accordance with Claim 2, for the control of a motor, with means for supplying pulse width modulated pulses (a) to a motor winding,
with means for reversal of the poles of the winding for starting a braking process, characterised in that, the reversal of the poles occurs intermittently for time periods (ton) which are separated by pauses (T-ton) and the duration of which is dependent upon the currently desired braking effect,
means being provided for the comparison of a first control variable (b) indicating the desired direction of rotation and a second control variable (c) indicating the actual direction of rotation,
a third control variable (d) occurring upon deviation initiating the intermittent reversal of the poles of the winding, the circuit being formed as a logic circuit (5) which has three inputs (a,b,c) for the pulse width modulated pulses (a), for the first control variable (b) and for the second control variable (c) and two outputs (d,e) for the reversal of the poles of the winding and of the motor drive (Fig.3).

10. A circuit in accordance with Claim 9, characterised in that, a terminal (a) carrying the pulse width modulated pulses is connected to the first inputs of an AND gate (3) and to an OR gate (4), a terminal (b) carrying the first control variable is connected to the first inputs of a first EXOR gate (1) and of a second EXOR gate (2), a terminal (c) carrying the second control variable is connected to the second input of the first EXOR gate (1), that the output of the first EXOR gate (1) is connected to the second inputs of the AND gate (3) and of the OR gate (4) and the output of the AND gate (3) is connected to the second input of the second EXOR gate (2) and that the output of the OR gate (4) supplies the pulses for the deriving of the motor (7) and the output (d) of the second EXOR gate (2) supplies a switching voltage for the reversal of the poles of the winding.

11. A method in accordance with Claim 1, characterised in that, pulses of constant amplitude need not be used for the control.

## Revendications

1. Procédé pour commander un moteur, selon lequel un enroulement du moteur reçoit des impulsions modulées en durée (a) où la polarité de l'enroulement est inversée afin de déclencher le freinage, **caractérisé en ce** qu'une inversion intermittente de la polarité de l'enroulement est effectuée pendant des périodes (ton) entrecoupées par des intervalles (T-ton), dont la longueur dépend de l'effet de freinage souhaité.

2. Procédé selon la revendication 1 **caractérisé en ce** qu'une première variable (b) représentant le sens de rotation nominal et une seconde variable (c) représentant le sens de rotation réel, sont comparées l'une avec l'autre, et qu'une troisième variable (d) déclenchera l'inversion intermittente de la polarité de l'enroulement dès lors que les deux premières grandeurs diffèrent l'une de l'autre.

3. Procédé selon la revendication 1 **caractérisé en ce** que le rapport (P) entre la durée (ton) de l'inversion de la polarité et la période (T) composée de l'inversion et de l'intervalle, est variable entre les valeurs 0 et 1.

4. Procédé selon la revendication 1 **caractérisé en ce** que les impulsions modulées en durée (e) et une tension de commutation (d) pour l'inversion intermittente de la polarité, sont déduites de la même tension pulsée (a).

5. Procédé selon la revendication 1 **caractérisé en ce** que, lorsque les sens de rotation nominal et réel concordent, le moteur (7) est alimenté par les seules impulsions modulées en durée (e) suivant un sens de rotation constant, et caractérisé en ce que, lorsque les sens de rotation nominal et réel diffèrent, ledit moteur (7) est alimenté de façon intermittente suivant un sens de rotation inverse.

6. Procédé selon la revendication 1 **caractérisé en ce** que la fréquence des impulsions modulées en durée (a, e) se situe au-dessus de la gamme audible.

7. Procédé selon la revendication 1 **caractérisé en ce** que la seconde variable (c) représentant le sens de rotation réel, est déterminée au moyen de capteurs associés au moteur (7).

8. Procédé selon la revendication 1 **caractérisé en ce** l'information concernant l'effet de freinage souhaité est déduite du moteur (7) et/ou de données caractéristiques du moteur par l'intermédiaire de capteurs.

9. Circuit pour un procédé selon la revendication 2 pour commander un moteur, comportant des moyens permettant d'amener des impulsions modulées en durée (a) sur un enroulement du moteur, et des moyens permettant d'inverser la polarité de l'enroulement pour déclencher le freinage, circuit **caractérisé en ce** que l'inversion de la polarité se fait de façon intermittente pendant des périodes (ton) entrecoupées par des intervalles (T-ton), dont la durée dépend de l'effet de freinage souhaité, sachant qu'il existe des moyens permettant de comparer une première variable (b) représentant le sens de rotation nominal et une seconde variable (c) représentant le sens de rotation réel, et sachant en outre qu'une troisième variable (d) intervient pour déclencher l'inversion intermittente de la polarité de l'enroulement dès lors que les deux premières grandeurs différent l'une de l'autre, et sachant par ailleurs que ledit circuit est conçu sous la forme d'un circuit logique (5) comportant trois entrées (a, b, c) pour les impulsions modulées en durée (a), pour la première variable (b) et pour la seconde variable (c), ainsi que deux sorties (d, e) pour l'inversion de la polarité de l'enroulement et pour l'entraînement du moteur (fig. 3).

10. Circuit selon la revendication 9 **caractérisé en ce** que qu'une borne (a) amenant les impulsions modulées en durée est connectée aux premières entrées d'une porte ET (3) et d'une porte OU (4), qu'une borne (b) amenant la première variable est reliée avec les premières entrées d'une première porte OU exclusif (1) et d'une seconde porte OU exclusif (2), qu'une borne (c) amenant la seconde variable est connectée à la seconde entrée de la première porte OU exclusif (1), que la sortie de ladite première porte OU exclusif (1) est branchée sur les secondes entrées de la porte ET (3) et de la porte OU (4) et que la sortie de la porte ET (3) est reliée avec la seconde entrée de la seconde porte ET exclusif (2), et **caractérisé en outre en ce** que la sortie de ladite porte OU (4) fournit les impulsions pour l'entraînement du (7) et la sortie (d) de la seconde porte OU exclusif (2) une tension de commutation pour l'inversion de la polarité de l'enroulement.

11. Procédé selon la revendication 1 **caractérisé en ce** qu'il n'est pas nécessaire d'utiliser des impulsions d'amplitude constante pour assurer l'alimentation.
